(19) Europäisches Patentamt European Patent Office Office européen des brevets

(11) **EP 2 579 658 B1**

(12) **EUROPEAN PATENT SPECIFICATION**

(45) Date of publication and mention
of the grant of the patent:
**14.08.2019 Bulletin 2019/33**

(21) Application number: **11789098.8**

(22) Date of filing: **08.04.2011**

(51) Int Cl.:
*H04J 11/00* (2006.01)      *H04W 72/00* (2009.01)
*H04W 72/08* (2009.01)      *H04W 72/04* (2009.01)

(86) International application number:
**PCT/CN2011/072549**

(87) International publication number:
**WO 2011/150719 (08.12.2011 Gazette 2011/49)**

(54) **METHOD AND DEVICE FOR PROCESSING INTER-CELL INTERFERENCE COORDINATION INFORMATION**

VERFAHREN UND VORRICHTUNG ZUR VERARBEITUNG VON INTERFERENZ-KOORDINATIONSINFORMATIONEN ZWISCHEN ZELLEN

PROCÉDÉ ET DISPOSITIF DE TRAITEMENT D'INFORMATIONS DE COORDINATION D'INTERFÉRENCE INTERCELLULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.06.2010 CN 201010197800**

(43) Date of publication of application:
**10.04.2013 Bulletin 2013/15**

(73) Proprietor: **ZTE Corporation**
**Shenzhen, Guangdong 518057 (CN)**

(72) Inventors:
• **DUAN, Ganggang**
  **Guangdong 518057 (CN)**
• **ZHAO, Gang**
  **Guangdong 518057 (CN)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**CN-A- 101 534 560      CN-A- 101 668 304**
**US-A1- 2007 086 406**

• **XUEHONG MAO ET AL: "Adaptive Soft Frequency Reuse for Inter-Cell Interference Coordination in SC-FDMA Based 3GPP LTE Uplinks", 2008 IEEE GLOBAL TELECOMMUNICATIONS CONFERENCE : [IEEE GLOBECOM 2008] ; NEW ORLEANS, LOUISIANA, 30 NOVEMBER 2008 - 04 DECEMBER 2008, IEEE, PISCATAWAY, NJ, USA, 30 November 2008 (2008-11-30), pages 1-6, XP031370599, ISBN: 978-1-4244-2324-8**
• **ERICSSON: "On Inter-cell Interference Coordination Schemes without/with Traffic Load Indication", 3GPP DRAFT; R1-074444, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shanghai, China; 20071005, 5 October 2007 (2007-10-05), XP050107956, [retrieved on 2007-10-05]**

**Description**

**Field of the Invention**

The disclosure relates to the field of communication, and in particular to a method and an apparatus for processing Inter-cell Interference Coordination (ICIC) information.

**Background of the Invention**

The downlink physical layer of the Long Term Evolution (LTE) adopts the Orthogonal Frequency Division Multiplexing (OFDM) technology for two-dimensional division of resource in frequency and time. In the LTE system, each cell uses all the available bandwidth, so that the throughout of the cell is greatly improved.

By taking the networking into consideration, the OFDM can guarantee that the signals between the users in the cell are orthogonal to effectively avoid the interference of the users in the cell. However, the interference between the cells still exists due to the same frequency range of the neighbour cells. Especially for the Cell Edge User (CEU), the signal of which is weaker, a serious inter-cell interference may occur if a neighbour edge user is also allocated with the same frequency band.

Currently, there are three common methods for processing the inter-cell interference: interference elimination, interference randomization and interference coordination. The interference elimination is to suppress the interference by processing the gain at the user side. The interference randomization is to suppress the interference by randomizing the interfering signal. The core of the interference coordination is to make the resource of the edge user of the neighbour cells orthogonal as much as possible by reasonably allocating the resource among multiple cells, so as to reduce the interference of the edge user between the neighbour cells. The interference coordination becomes the main stream technology of the inter-cell interference processing due to its flexible use, simple implementation and ideal effect.

ICIC is classified into static ICIC, dynamic ICIC and semi static ICIC. The static ICIC is too restrictive on resource and has large influence on performances such as the frequency selection. The dynamic ICIC has large overhead for signalling and long delay in the signalling interaction among base stations. The semi static IGIG can overcome the shortcomings of the first two to some extent. The key of the semi static ICIG is to transmit the inter-cell load information among base stations via the X2 interface, so as to acquire the resource occupation information of the neighbour cells and to use such information as the basis of resource allocation of this cell. According to the current protocols, the load information mainly comprises the following information: cell information, cell ID of the source cell, uplink High Interference Indication (HII) information, downlink Relative Narrowband Tx Power (RNTP) information, and uplink Overload Indication (01) information. In the above, the RNTP information is generated by measuring the power of the given Resource Element (RE). In such case, the physical layer needs to report the corresponding measured RE power. Then the base station computes the RNTP information bit and generates the RNTP information according to the reported value. This generation method depends on the accuracy of the Energy Per RE (EPRE) measured and reported to the Media Access Control (MAC) layer by the physical layer. But it is hard for the physical layer to accurately measure and report the transmission power.

Thus, the accuracy of resource allocation is negatively affected.

The related document ("Adaptive soft Frequency Reuse for Inter-Cell Interference Coordination in SC-FDMA Based 3GPP LTE Uplinks") discloses a decentralized adaptive soft frequency reuse scheme for the uplink of 4G Long-term evolution systems; the related document ("On Inter-cell Interference Coordination Schemes Without/with Traffic Load Indication") discloses uplink Inter-cell interference coordination with X2 support; the related document (US2007086406A1) discloses method for assigning resources in a communication system.

**Summary of the Invention**

The present invention provides for a method and an apparatus for processing Inter-cell Interference Coordination (ICIC) as defined by the independent claims so as to solve the problems above. Further advantageous aspects of the invention are defined in the dependent claims.

According to one aspect of the disclosure, a method for processing ICIC information is provided, comprising: determining quantity of Resource Blocks (RBs) occupied by a cell edge user of a cell in a predetermined time interval; setting value of bits of the same quantity in interference coordination information of the cell to 1; arranging the bits with the value of 1 on a bandwidth according to a predetermined extension sequence, based on a range of dedicated resource for the cell edge user of the cell; and sending the interference coordination information from the cell to a neighbour cell.

Preferably, the step of determining the quantity of the RBs occupied by the cell edge user of the cell in the predetermined time interval comprises: performing statistics of sum of the RBs occupied by the cell edge user in a certain time duration; and computing an average quantity of the RBs occupied by the cell edge user in the predetermined time interval according to the sum.

Preferably, the predetermined time interval is a Transmission Time Interval (TTI).

Preferably, the step of sending the interference coordination information from the cell to the neighbour cell comprises: comparing corresponding bits of the interference coordination information and interference coordination information obtained in a last time in turn; and if quantity of bits with different values in two bit graphs exceeds a threshold, sending the interference coordination information to the neighbour cell.

Preferably, the method further comprises: allocating resource, by the cell, according to the interference coordination information of the cell and interference coordination information from the neighbour cell.

Preferably, the cell performs statistics of the interference coordination information received from the neighbour cell in a predetermined time period, to obtain the interference coordination information from the neighbour cell.

Preferably, the step that the cell performs statistics of the interference coordination information received from the neighbour cell in the predetermined time period comprises: performing, by the cell, bitwise summation or bitwise weighted summation on the interference coordination information received from the neighbour cell in the predetermined time period.

According to the invention, the step of arranging the bits with the value of 1 on the bandwidth according to the predetermined extension sequence based on the range of the dedicated resource for the cell edge user of the cell comprises:

the dedicated resource of the cell edge user of the cell and other two neighbour cells in a same base station occupying different frequency ranges;

in the interference coordination information of a cell, the dedicated resource of the cell edge user of which occupy a frequency range of a leftmost section of the bandwidth, a bit corresponding to a first predetermined RB being 1, and other bits being 0, wherein the first predetermined RB is first N RBs of a

sequence in which the dedicated resource of the cell edge user of the cell is arranged in an ascending order, and N is the quantity of the RBs occupied by the cell edge user of the cell in the predetermined time interval; in the interference coordination information of a cell, the dedicated resource of cell edge user of which occupy a frequency range of a middle section of the bandwidth, a bit corresponding to a second predetermined RB being 1, and other bits being 0, wherein the second predetermined RB is last N RBs of a sequence in which the dedicated resource of the cell edge user of the cell is arranged from middle to two sides; and in the interference coordination information of a cell, the dedicated resource of the cell edge user of which occupy a frequency range of a third section of the bandwidth, a bit corresponding to a third predetermined RB being 1, and other bits being 0, wherein the third predetermined RB is middle N RBs of a sequence in which the dedicated resource of the cell edge user of the cell is arranged in a descending order.

According to another aspect of the disclosure, an apparatus for processing ICIC information is further provided, located at a Media Access Control (MAC) layer of a base station, and comprising: a resource data statistics module, configured to determine quantity of Resource Blocks (RBs) occupied by a cell edge user of a cell in a predetermined time interval; an interference coordination information generating module, configured to set value of bits of the same quantity in interference coordination information of the cell to 1, and to arrange the bits with the value of 1 on a bandwidth according to a predetermined extension sequence based on a range of dedicated resource for the cell edge user of the cell and of an neighbour cell of the cell; and an interference coordination information sending module, configured to send the interference coordination information to the neighbour cell.

Preferably, the apparatus further comprises: an interference coordination information receiving module configured to receive the interference coordination information from the neighbour cell.

The solution provided by the disclosure determines the quantity of the RBs occupied by cell edge user of a cell in the predetermined time interval. The value of the bits of the same quantity in the interference coordination information of the cell is set to 1. The bits with the value of 1 on the bandwidth are arranged according to a predetermined extension sequence based on the range of the dedicated resource for the cell edge user of the cell. The interference coordination information is sent from the cell to the neighbour cell. The problem in the related arts that the base station generates the RNTP information according to the information measured and reported by the physical layer, causing possible negative affection to the accuracy of resource allocation is solved. The accuracy of resource allocation for the base station is improved and the inter-cell interference is reduced.

## Brief Description of the Drawings

The drawings illustrated herein are to provide further understanding of the disclosure and constitute one part of the application. The exemplary embodiments of the disclosure and the explanations thereof are intended to explain the disclosure, instead of improperly limiting the disclosure. In the drawings:

Fig. 1 is a flowchart of a method for processing ICIC information according to one embodiment of the disclosure;

Fig. 2 is a diagram showing the extension directions of RNTP bitmaps of different cells in an RNTP generation process according to one embodiment of the disclosure;

Fig. 3 is a block diagram showing the structure of an apparatus for processing ICIC information according to one embodiment of the disclosure;

Fig. 4 is a block diagram showing the structure of an apparatus for processing ICIC information according to one embodiment of the disclosure;

Fig. 5 is a flowchart of an RNTP generation process according to the second embodiment of the disclosure;

Fig. 6 is a flowchart of an RNTP receiving process according to the second embodiment of the disclosure;

Fig. 7 is a block diagram showing a structure according to the second embodiment of the disclosure; and

Fig. 8 is a diagram showing the extension directions of RNTP bitmaps of different cells in an RNTP generation process according to the fifth embodiment of the disclosure.

## Detailed Description of the Embodiments

The disclosure will be described in detail hereinafter with reference to the drawings and embodiments. It should be noted that, in case of no conflict, the embodiments of the disclosure and features therein can be combined with each other.

First embodiment

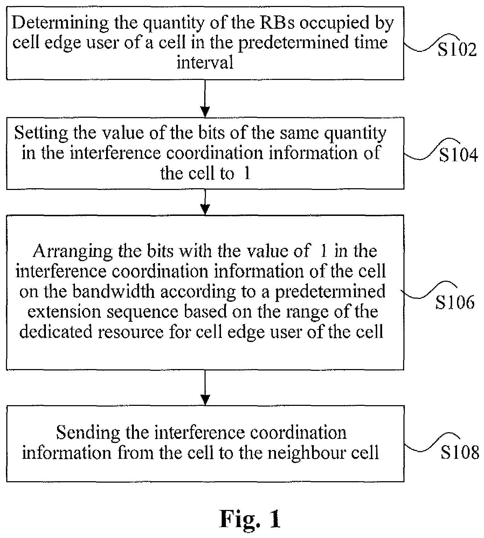

A method for processing ICIC information is provided in the embodiment. Fig. 1 is a flowchart of a method for processing ICIC information according to one embodiment of the disclosure, comprising the following steps.

Step S102: Determining the quantity of the RBs occupied by cell edge user of a cell in the predetermined time interval.

Step S104: Setting the value of the bits of the same quantity in the interference coordination information of the cell to 1.

Step S106: Arranging the bits with the value of 1 in the interference coordination information of the cell on the bandwidth according to a predetermined extension sequence based on the range of the dedicated resource for the cell edge user of the cell.

Step S108: Sending the interference coordination information from the cell to the neighbour cell.

By the above steps, the cell generates the interference coordination information (such as, RNTP information and HII information) according to the quantity of the RBs of the MAC layer. This solution solves the problem caused by the information generation by the measurement and report of the physical layer.

Preferably, Step S102 can comprises performing statistics of the sum of the RBs occupied by the cell edge user in a certain time duration, and computing the average quantity of the RBs occupied by the cell edge user in the predetermined time interval according to the sum. It should be explained that the "certain time duration" in Step S102 can be determined according to the actual condition and is adopted to compute the average quantity of the RBs occupied by the cell edge user in the time interval. For example, the statistics of the sum of the RBs occupied by the cell edge user is computed in a statistic time (which may be an integral multiple of Transmission Time Interval (TTI), such as 50 or 100 TTIs). Then, the quantity of TTIs included in the statistic time is computed, so as to obtain the average quantity of the RBs occupied by the cell edge user in each TTI.

Preferably, in Step S108, a judgment can be made first, and then whether to send the interference coordination information is determined. For example, the corresponding bits in the interference coordination information obtained this time and in the interference coordination information obtained in the last time are compared in turn. If the quantity of the bits with different values in the two bit graphs exceeds a threshold, the interference coordination information is sent to the neighbour cell,

Preferably, the cell can further receive the interference coordination information from the neighbour cell. Then resource is allocated according to the interference coordination information of both the cell and the neighbour cell. For example, the cell can perform statistics of the interference coordination information received from the neighbour cell in a predetermined time period (for example, performing bitwise summation or bitwise weighted summation on the interference coordination information received from the neighbour cell in the predetermined time period), so as to obtain the interference coordination information from the neighbour cell. It should be explained that the "predetermined time period" here may be selected according to the actual condition. For example, 10 or 20 TTIs may be selected.

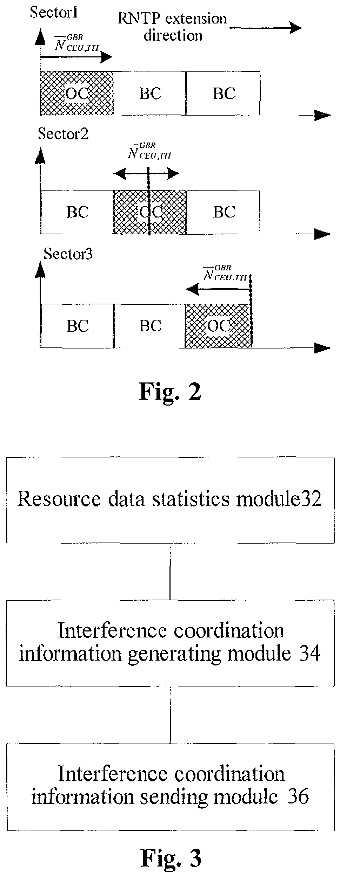

The following description takes three cells of the same base station as an example. For the same base station, the dedicated resource of the cell edge user of the cell and other two neighbour cells occupy different frequency ranges. Specifically, in the interference coordination information of the cell, the dedicated resource of the cell edge user of which occupy the frequency range of the leftmost section of the bandwidth, the bit corresponding to the first predetermined RB is 1, and other bits are 0, wherein the first predetermined RB is the first N RBs of a sequence in which the dedicated resource of the cell edge user of the cell is arranged in an ascending order, and N is the quantity of the RBs occupied by the cell edge user of the cell in the predetermined time interval. In the interference coordination information of the cell, the dedicated resource of the cell edge user of which occupy the frequency range of the middle section of the bandwidth, the bit corresponding to the second predetermined RB is 1, and other bits are 0, wherein the second predetermined RB is the last N RBs of a sequence in which the dedicated resource of the cell edge user of the cell is arranged from the middle to two sides. In the interference coordination information of the cell, the dedicated resource of the cell edge user of which occupy the frequency range of the third section of the bandwidth, the bit corresponding to the third predetermined RB is 1, and other bits are 0, wherein the third predetermined RB is the middle N RBs of a sequence in which the dedicated resource of the cell edge user of the cell is arranged in a descending order. The description below takes the generation of RNTP as an example with reference to Fig. 2.

Fig. 2 is a diagram showing the extension directions of RNTP bitmaps of different cells in an RNTP generation process according to one embodiment of the disclosure. In Fig. 2, the frequency band is divided into three sections and there is no center dedicated frequency band (IC). As shown in Fig. 2, the part with shadow lines represents the dedicated frequency band (OC) for the edge user of the cell. The part without shadow lines is divided into two parts of available resource (BC) which can be occupied by the center user of the cell. It is assumed that the three cells are three sectors of a base station: sector 1, sector 2, and sector 3.

The generation of the first RNTP information bit is as follows:

$$RNTP_{new} = \begin{cases} 1, & i \in N \text{ RBs of the OC resource of the cell in an ascending order} \\ 0, & other \end{cases}$$

It should be explained that the formula above only conforms to the condition that the edge dedicated resource is pre-allocated at sector 1 of [0, OC]. When the edge dedicated resource is pre-allocated at sector 2 of [OC, 20C], the RNTP bitmap is that the OC resource of the cell is extended from the middle to two sides. The formula in this condition is similar to the formula above, thereby needing no further description. When the edge dedicated resource is pre-allocated at sector 3 of [2OC, 3OC], the RNTP information is extended in a descending order. The fragments in the resource allocation can be reduced as many as possibly by configuring the extension direction.

Fig. 3 is a block diagram showing the structure of an apparatus for processing ICIC information according to one embodiment of the disclosure. The apparatus is located at the MAC layer of a base station. As shown in Fig. 3, the apparatus comprises: a resource data statistics module 32, an interference coordination information generating module 34 and an interference coordination information sending module 36. These modules are explained below.

The resource data statistics module 32 is configured to determine the quantity of the RBs occupied by the cell edge user of a cell in the predetermined time interval. The interference coordination information generating module 34 is connected to the resource data statistics module 32 and is configured to set value of bits of the same quantity in the interference coordination information of the cell to 1, and to arrange the bits with the value of 1 on the bandwidth and to stagger the bits on the frequency according to a predetermined extension sequence, based on the range of the dedicated resource for the cell edge user of both the cell and the neighbour cell. The interference coordination information sending module 36 is connected to the interference coordination information generating module 34 and is configured to send the interference coordination information to the neighbour cell.

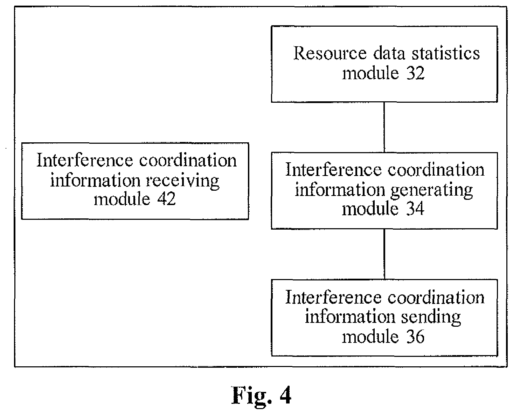

Fig. 4 is a block diagram showing the structure of an apparatus for processing ICIC information according to one embodiment of the disclosure. As shown in Fig.4, the apparatus further comprises: an interference coordination information receiving module 42, configured to receive the interference coordination information from the neighbour cell.

Second embodiment

The embodiment provides a method and an apparatus for generating and processing RNTP information by the MAC layer independently without the EPRE reported by the physical layer. The embodiment integrates the first embodiment and its preferred embodiments. It should be explained that the uplink HII information can also be generated by the same process. The description below takes the generation of RNTP information as an example, and the generation of HII information is not repeated in the embodiment any more.

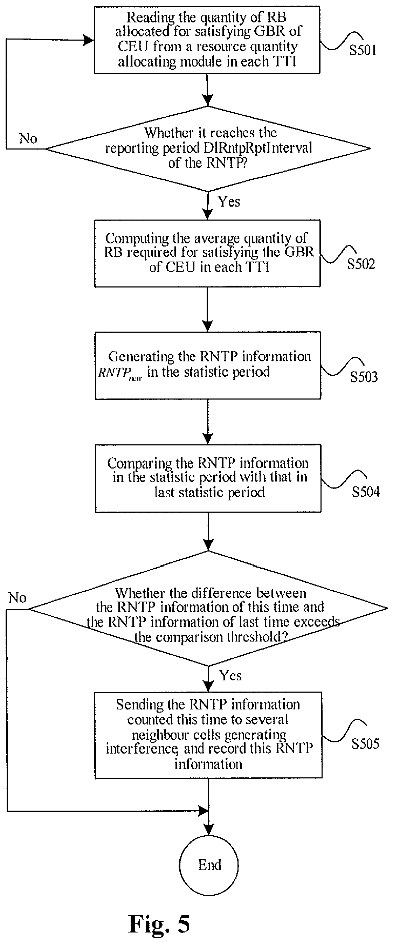

Fig. 5 is a flowchart of an RNTP generation process according to the second embodiment of the disclosure, comprising the following steps.

Step S501: Performing statistics of the quantity of the RBs occupied by the edge user of the cell in each TTI of each cell till it reaches the predetermined statistic period; and if it does not reach the statistic period, continuing the step and accumulating the quantity of RBs continuously; otherwise, executing Step S502.

Step S502: Computing the average quantity of the RBs occupied by the edge user in each TTI of each cell in the statistic period.

Step S503: Generating the RNTP Per Physical RB (PRB) information (hereafter referred to as RNTP information) of the cell according to the predetermined range of dedicated resource (OC) of the cell edge user and the average quantity of RBs occupied by the edge user in each TTI of each cell.

Step S504: Comparing the RNTP Per PRB information generated in this period with the RNTP Per PRB information of the cell generated in the last statistic period; if the quantity of different bits of these RNTP Per PRB information exceeds the predetermined threshold RNTPDiffThp, executing Step S505, and sending the information to the neighbour cell; otherwise, not sending the information and clearing the RNTP Per PRB information in the period according to bits to prepare for performing statistics in the next period. Preferably, the default value of RNTPDiffThp is 0, which indicates that the RNTP information in the period is sent to the neighbour cell no matter it is updated or not. The RNTPDiffThp can be adjusted as required, and the adjustment range does not exceed the quantity of the RBs corresponding to the actual bandwidth.

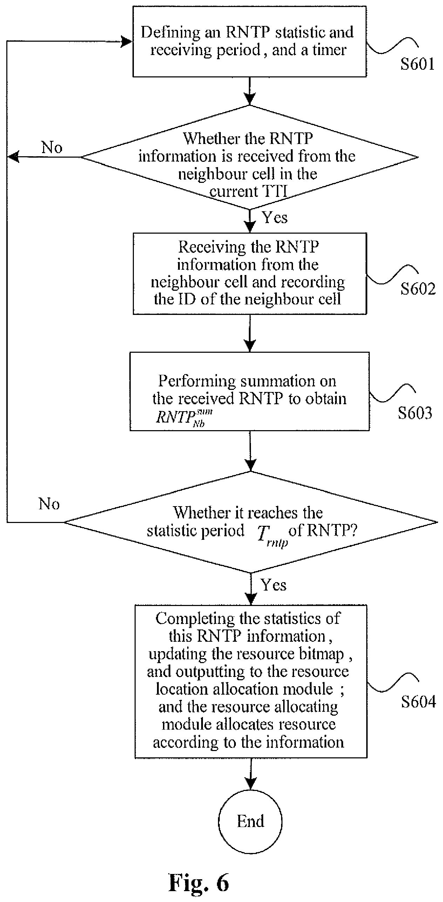

Fig. 6 is a flowchart of an RNTP receiving process according to the second embodiment of the disclosure, comprising the following steps.

Step S601: Defining an RNTP statistic and receiving period and a timer.

Step S602: Each cell detects whether a neighbour cell sends the RNTP information in each TTI; if yes, receiving the RNTP information from the neighbour cell and recording the ID of the neighbour cell.

Step S603: Processing the received RNTP information with the RNTP information received previously, such as performing bitwise summation and bitwise weighted summation; and judging whether it reaches the receiving and statistic period of the RNTP; if not, continuing the step, and if yes, executing the next step.

Step S604: Updating the resource bitmap of the cell according the RNTP interference indication obtained by performing the above processing to the received RNTP and the RNTP Per PRB information of the cell, and outputting the resource bitmap to the resource allocating module; and the resource location allocating module of the cell allocates the resource according to the RNTP Per PRB information of the cell and the RNTP interference indication of the neighbour cell.

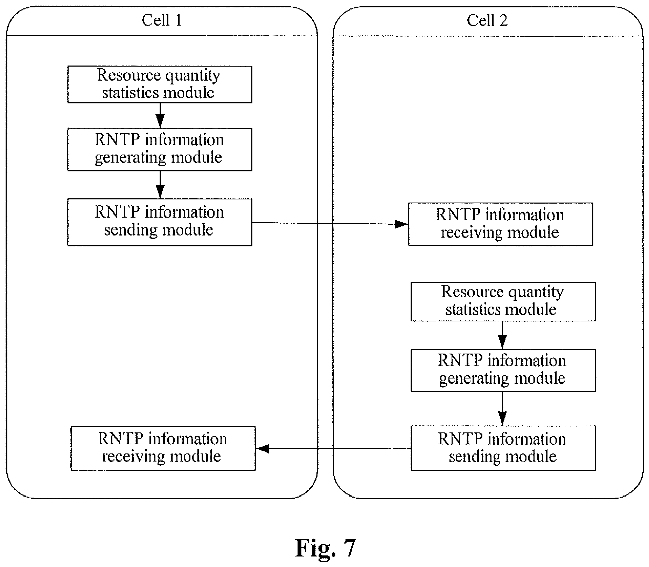

Fig. 7 is a block diagram showing the structure of an apparatus according to the second embodiment of the disclosure. As shown in Fig. 7, the apparatus comprises: a resource quantity statistics module, an RNTP information generating module, an RNTP information sending module and an RNTP information receiving module. The apparatus is located at the MAC layer of an eNB.

The resource quantity statistics module is mainly configured to perform statistics of the resource occupation condition of the edge user of each cell periodically, for the subsequent generation of the RNTP Per PRB information.

The RNTP information generating module is mainly configured to generate RNTP Per PRB bitmap information according to the quantity of resource occupation obtained by the resource quantity statistics module and the predefined range of the dedicated resource (OC) of the edge user. In the above, the OC resource is located at different frequency ranges of the bandwidth of the cell according to different cells. The RNTP Per PRB bitmap information represents which locations the edge user of the cell will occupy. The PRB represents the location information. The RNTP represents the occupation flag, of which 1 represents occupied, and 0 represents unoccupied.

The RNTP information sending module is mainly configured to compare the new RNTP information with the RNTP information generated in the last statistic period according to bits. If the quantity of different bits exceeds the predetermined RNTP sending threshold, it indicates that the two statistics results are quite different and the resource occupation of edge user has changed greatly. Then, the new RNTP information is sent. Otherwise, it indicates the two comparison results are slightly different and have little influence on the resource allocation. Then, in order to save signalling, the information may not be sent.

The RNTP information receiving module is mainly configured to receive the RNTP information of the neighbour cell circularly in the statistic and receiving period, to avoid the phenomenon that the RNTP information of multiple neighbour cells arrives at the cell at different time; and after the statistic period is ended, the bitwise summed RNTP information is output to the resource allocating module for reference.

Through the embodiment, on one hand, the generation of RNTP can get rid of the influence of the EPRE reported by the physical layer, and get rid of the limitation of inaccurate power measurement and report of the physical layer. On the other hand, based on the policy of generating RNTP based on the RBs allocated to the CEU, resource is allocated according to the quantity and proportion of the resource occupied by the edge user. This solution not only directly reflects the resource condition of edge user of the cell at different resource locations of the current cell, but also more precisely and directly reflects whether the neighbour cell edge has interference to some resource location of the cell and the intensity of such interference. Thus, this solution is also very accurate for the adjustment and influence of the resource location allocation.

Third Embodiment

The generating processing flow of the RNTP provided by the embodiment is as follows.

Each downlink subframe records the quantity $N_{CEU,k}^{GBR}$ of the RBs required for satisfying the Guaranteed Bit Rate (GBR) of the CEU, wherein

$$k = sysSFN, sysSFN - 1, ..., sysSFN - DlRntpRptInterval - 1,$$

DlRntpRptInterval is the reporting period of the RNTP, the default value of which is UlOIRptInterval (the reporting period of uplink OI) or is an integral multiple of the UlOIRptInterval. Thereby, the interaction of load indication can be reduced.

If no CEU is scheduled at k subframe, $N_{CEU,k}^{GBR} = 0$.

The quantity $N_{CEU}^{GBR}$ of RBs allocated for satisfying the GBR of the CEU in a period is calculated, wherein the default value of the period is 100 TTIs: $N_{CEU}^{GBR} = \sum\limits_{k=sysSFN-DlRntpRptInterval-1}^{sysSFN} N_{CEU,k}^{GBR}$. This is the quantity of the RBs occupied by the CEU in the statistic period of each cell is accumulated. Then, the average quantity $\overline{N}_{CEU,TTI}^{GBR}$ of the RB required for satisfying the GBR of the CEU in each TTI is computed,

$$\overline{N}_{CEU,TTI}^{GBR} = \frac{N_{CEU}^{GBR}}{n_{DlTtiInDlRntpRptInterval}}$$

wherein $n_{DlTtiInDlRntpRptInterval}$ is the quantity of the downlink subframe in the reporting period of the RNTP.
The generation of the RNTP information bit is as follows:

$$RNTP_{new} = \begin{cases} 1, & i \in \overline{N}_{CEU,TTI}^{GBR} \text{ RBs of the OC resource of the cell in an ascending order} \\ 0, & \text{other} \end{cases}$$

.

In the above, the formula only conforms to the condition that the edge dedicated resource is pre-allocated at sector 1 of [0, OC]. If the edge dedicated resource is pre-allocated at sector 2 of [OC, 2OC], the RNTP bitmap is that the OC resource of the cell is extended from the middle to two sides. If the edge dedicated resource is pre-allocated at sector 3 of [2OC, 3OC], the RNTP information is extended in a descending order. The extension direction is configured to reduce the fragments in the resource allocation as much as possible.

$RNTP_{new}$ is compared with $RNTP_{old}$, if

$$numOfBits(RNTP_{new} \; xor \; RNTP_{old}) > RNTPDiffThreshold,$$

the $RNTP_{new}$ is the RNTP finally sent to the neighbour cell. RNTPDiffThreshold is a threshold of a predetermined value and is set to reduce the sending of RNTP if the RNTP does not change greatly during the two reporting period. The default value of RNTPDiffThreshold is 0, which indicates that the new RNTP information is sent to the neighbour cell no matter what the two comparison result is. This parameter can be adjusted as required and cannot exceed the quantity of the RBs of the downlink bandwidth.

Let $RNTP_{old} = RNTP$ for the next comparison. The receiving processing algorithm of the RNTP is used for analyzing the RNTP information sent from the neighbour cell to this cell.

The RNTP receiving processing flow is as follows.

A processing period $T_{rntp}$ of RNTP is defined as different neighbour cells may send RNTP at different time. The default value of the processing period is 10 TTIs. At maximum, the processing period is 20 TTIs and can be adjusted as required. A period timer is used to trigger the following processing flow of RNTP.

The RNTP information sent from the neighbour cell is read and recorded in each TTI. If it does not reach the processing period $T_{rntp}$ of the RNTP, the RNTP information from the neighbour cell is read continuously.

The received RNTP is bitwise summed to obtain an RNTP indication, which is represented by $RNTP_{Nb}^{sum}$:

$$RNTP_{Nb}^{sum} = \sum_{cellId \in \{cellId_{Nb}\}} RNTP^{cellId}$$,

wherein $RNTP^{cellId}$ is RNTP sent from the neighbour cell (cellId) to this cell. $\{cellId_{Nb}\}$ is the set of the neighbour cells cellId. The summation method here is only an example for illustrating how to process the RNTP information received from the neighbour cell. It is not limited to the method.

The statistics of the RNTP information is completed and the resource bitmap is updated.

Due to different frequency range divisions in the interference coordination, the generation of RNTP and its extension direction are also different. To be described as fully as possible, the solution of the disclosure is further described below through the fourth and fifth embodiments.

Fourth embodiment

Considering the condition that the pre-allocated frequency range is divided into three sections, and aims at the generation processing condition of the downlink RNTP information, Fig. 2 aims at the condition that the frequency is divided into three sections and there is no center dedicated frequency band (IC). As shown in Fig. 2, the part with shadow lines represents the dedicated frequency band (OC) of edge user of the cell. The part without shadow lines is divided into two parts of available resource (BC) which can be occupied by the center user of the cell.

Under the condition of the above pre-allocated frequency band, considering the simple scene of small quantity of edge users, light cell load, low GBR requirements, and less occupied resource of edge user which do not exceed the range of dedicated resource (OC) of the edge user, the generation and whole processing flow of the RNTP are as follows.

The quantity of RBs required for satisfying the GBR of the CEU is recorded in each cell in each downlink subframe. If it does not reach the statistic period, the performing of the statistics is continued and the quantity of RBs is summed. If it has reached the statistic period, the average quantity of the RBs allocated to the CEU in each TTI of each cell is obtained. The quantity of the RBs is adjusted according to the average GBR satisfying condition of the CEU. Supposing the finally obtained quantity of the RBs is Nrb, each sector maintains its own Nrb value.

In case of low RB demands of the edge user, the RNTP bitmap information is generated in different frequency bands for three sectors of a base station. In the first sector, Nrb bits are set to 1 from left to right in [0, OC] bandwidth. If there are OC-Nrb bits remain, they are set to 0. Similarly, in the second sector, Nrb/2 bits are extended from the middle (OC*3/2) to two sides in [OC, 2OC] bandwidth. The extended bits are set to 1, and the remaining bits are set to 0. Similarly, in the third sector, Nrb bits are extended from right to left in [2OC, 3OC] bandwidth. The extended bits are set to 1, and the remaining bits are set to 0.

In this scenario, each cell can basically meet the requirements of edge users in the range of dedicated resource (OC) for its edge user. Thus, during the resource allocation, these locations are allocated to the edge, and other locations are allocated to the center. The cell edges are staggered with one another on frequency to achieve the purpose of interference coordination.

Fifth embodiment

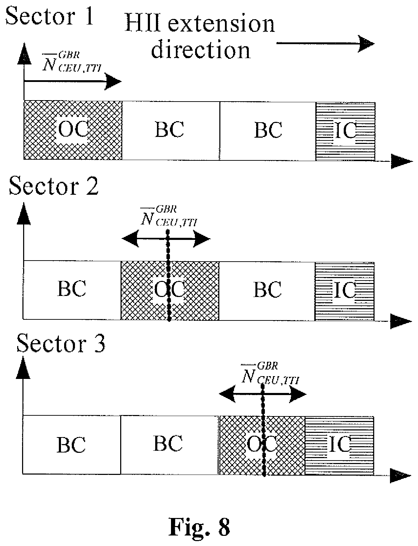

Fig. 8 is a diagram showing the extension directions of RNTP bitmaps in different cells in an RNTP generation process according to the fifth embodiment of the disclosure. Fig. 8 aims at the condition that the frequency is divided into four sections and there is a center dedicated frequency band (IC). Considering the condition that the pre-allocated frequency range is divided into four sections and the sent information is uplink HII, the part with twilled shadow lines represents the dedicated frequency band (OC) of the edge user of the cell, and the part with crossed shadow lines represents the resource which can be occupied by the center user of the cell and can be borrowed by the edge user of the cell. If the dedicated frequency band (OC) can meet the requirements of the edge user, the BC resource are completely allocated to the center user of the cell. The IC is dedicated to the center user of the cell.

In case of the above pre-allocated frequency band, considering the complex scenario of large quantity of edge users, large cell load, high GBR requirement, and many resource occupied by edge user which may even exceed the pre-allocated range of dedicated resource (OC) of the edge user, the generation and whole processing flow of HII are as follows.

The quantity of RBs required for satisfying the GBR of CEU is recorded by each cell in each downlink subframe. If it does not reach the statistic period, the performing of statistics is continued and the quantity of RBs is summed. If it has reached the statistic period, the next step is executed.

The average quantity of the RBs allocated to the edge user is obtained in each TTI in each cell. The quantity of the RBs is adjusted according to the average GBR satisfying condition of the CEU. Supposing the finally obtained quantity of the RBs is Nrb, each sector maintains its own Nrb value. The next step is executed.

In case of high RB demands of the edge user, the HII bitmap information is generated in different frequency bands for three sectors of a base station. In the first sector, Nrb bits are set to 1 from left to right in [0, OC] bandwidth. In such scenario, Nrb may extend towards right to break out of the range of OC and enter the range of dedicated resource of the second sector, and may also enter the range of dedicated resource of the third sector in extreme case. Similarly, in the second sector, Nrb/2 bits are extended from the middle (OC*3/2) to two sides in [OC, 2OC] bandwidth and the extended bits are set to 1. They may break out of the limitation of [OC, 2OC] and enter the range of dedicated resource of the edge user of the first and third sectors respectively. Similarly, in the third sector, Nrb bits are extended from right to left in [2OC, 3OC] bandwidth. The extended bits are set to 1, and the remaining bits are set to 0. Similarly, the bits set to 1 may also be extended to the range of dedicated resource of the edge user in the first and second sectors.

In such case, the scheduling policy may be a little more complex. Each cell needs to refer to two pieces of information when allocating resource to the edge user: 1, HII bitmap information indication of this cell, in which the bit with an indication of 1 represents the resource location to be occupied by this cell. The neighbour cell should avoid allocating these locations to the edge user when receiving the HII bitmap information of this cell. 2, information obtained by processing of the HII information sent from the neighbour cell to this cell, such as bitwise summation. This information represents the superimposition of the HII information sent by the neighbour cell at the corresponding resource location of this cell. The larger the superimposition sum is, the greater the influence of the neighbour cell edge on the location is. This cell may further avoid allocating these locations to the edge user when allocating the resource.

In this scenario, each cell cannot meet the requirements of the edge user in the range of dedicated resource (OC) of its own edge user. Some dedicated resource of each cell may be superimposed, so that interference necessarily exists. In this case, it is necessary to find resource for allocation according to an ascending order of interference indication. The cell edges where the frequency interference is large are staggered with one another as much as possibly in order to control the interference.

To sum up, the RNTP and HII information generated in the embodiments of the disclosure may influence the policy of allocating resource according to inter-cell interference of the cell. Thus, this solution achieves ICIC and rational resource allocation.

Obviously, those skilled in the art shall understand that the modules or steps of the disclosure may be implemented by a general computing apparatus and centralized in a single computing apparatus or allocated in a network consisting of multiple computing apparatus. Optionally, the modules or steps may be implemented by program codes executable by the computing apparatus, so that they may be stored in a storage apparatus to be executed by the computing apparatus. In some cases, the steps can be executed in a sequence different from the illustrated or described sequence, or the modules are respectively made into the integrated circuit modules or many of them are made into a single integrated circuit module. By doing so, the disclosure is not limited to any specific combination of hardware and software.

The above is only preferred embodiments of the disclosure and is not intended to limit the disclosure. For those skilled in the art, the disclosure may have various modifications and changes. Any modifications, equivalent replacements, improvements within the principle of the disclosure shall fall within the scope of protection of the disclosure.

## Claims

1. A method for processing Inter-cell Interference Coordination, ICIC, information, comprising:

   determining a quantity of Resource Blocks , RBs, occupied by a cell edge user of a cell in a predetermined time interval (S102);
   setting a value of bits of the same quantity in an interference coordination information of the cell to 1 (S104);
   arranging the bits with the value of 1 on a bandwidth according to a predetermined extension sequence, based on a range of a dedicated resource for the cell edge user of the cell (S106); and
sending the interference coordination information from the cell to a neighbour cell (S108);
wherein the step of arranging the bits with the value of 1 on the bandwidth according to the predetermined extension sequence based on the range of the dedicated resource for the cell edge user of the cell comprises:

the dedicated resource of the cell edge user of the cell and the dedicated resource of the cell edge user of other two neighbour cells in a same base station occupying different frequency ranges;
in the interference coordination information of a cell, the dedicated resource of the cell edge user of which occupies a frequency range of a leftmost section of the bandwidth, a bit corresponding to a first predetermined RB being 1, and other bits being 0, wherein the first predetermined RB is first N RBs of a sequence in which the dedicated resource of the cell edge user of the cell is arranged in an ascending order, and N is the quantity of the RBs occupied by the cell edge user of the cell in the predetermined time interval;
in the interference coordination information of a cell, the dedicated resource of the cell edge user of which occupies a frequency range of a middle section of the bandwidth, a bit corresponding to a second predetermined RB being 1, and other bits being 0, wherein the second predetermined RB is last N RBs of a sequence in which the dedicated resource of the cell edge user of the cell is arranged from middle to two sides; and
in the interference coordination information of a cell, the dedicated resource of the cell edge user of which occupies a frequency range of a third section of the bandwidth, a bit corresponding to a third predetermined RB being 1, and other bits being 0, wherein the third predetermined RB is middle N RBs of a sequence in which the dedicated resource of the cell edge user of the cell is arranged in a descending order.

2.   The method according to claim 1, wherein the step of determining the quantity of the RBs occupied by the cell edge user of the cell in the predetermined time interval comprises:

performing statistics of sum of the RBs occupied by the cell edge user in a certain time duration; and
computing an average quantity of the RBs occupied by the cell edge user in the predetermined time interval according to the sum.

3.   The method according to claim 1 or 2, wherein the predetermined time interval is a Transmission Time Interval TTI.

4.   The method according to claim 1, wherein the step of sending the interference coordination information from the cell to the neighbour cell comprises:

comparing corresponding bits of the interference coordination information and interference coordination information obtained in a last time in turn; and
if quantity of bits with different values in two bit graphs exceeds a threshold, sending the interference coordination information to the neighbour cell.

5.   The method according to claim 1 or 4, further comprising:
allocating resource, by the cell, according to the interference coordination information of the cell and interference coordination information from the neighbour cell.

6.   The method according to claim 5, wherein the cell performs statistics of the interference coordination information received from the neighbour cell in a predetermined time period, to obtain the interference coordination information from the neighbour cell.

7.   The method according to claim 6, **characterized in that** the step that the cell performs statistics of the interference coordination information received from the neighbour cell in the predetermined time period comprises:
performing, by the cell, bitwise summation or bitwise weighted summation on the interference coordination information received from the neighbour cell in the predetermined time period.

8.   An apparatus for processing Inter-cell Interference Coordination , ICIC, information, located at a Media Access Control , MAC, layer of a base station, and comprising:

a resource data statistics module (32), configured to determine a quantity of Resource Blocks RBs occupied by a cell edge user of a cell in a predetermined time interval;
an interference coordination information generating module (34), configured to set a value of bits of the same quantity in an interference coordination information of the cell to 1, and to arrange the bits with the value of 1 on a bandwidth according to a predetermined extension sequence based on a range of a dedicated resource for the cell edge user of the cell and of a neighbour cell of the cell; and

an interference coordination information sending module (36), configured to send the interference coordination information to the neighbour cell;

wherein interference coordination information generating module (34) is also configured so as to:

the dedicated resource of the cell edge user of the cell and the dedicated resource of the cell edge user of other two neighbour cells in a same base station occupying different frequency ranges;

in the interference coordination information of a cell, the dedicated resource of the cell edge user of which occupies a frequency range of a leftmost section of the bandwidth, a bit corresponding to a first predetermined RB being 1, and other bits being 0, wherein the first predetermined RB is first N RBs of a sequence in which the dedicated resource of the cell edge user of the cell is arranged in an ascending order, and N is the quantity of the RBs occupied by the cell edge user of the cell in the predetermined time interval;

in the interference coordination information of a cell, the dedicated resource of the cell edge user of which occupies a frequency range of a middle section of the bandwidth, a bit corresponding to a second predetermined RB being 1, and other bits being 0, wherein the second predetermined RB is last N RBs of a sequence in which the dedicated resource of the cell edge user of the cell is arranged from middle to two sides; and

in the interference coordination information of a cell, the dedicated resource of the cell edge user of which occupies a frequency range of a third section of the bandwidth, a bit corresponding to a third predetermined RB being 1, and other bits being 0, wherein the third predetermined RB is middle N RBs of a sequence in which the dedicated resource of the cell edge user of the cell is arranged in a descending order.

**9.** The apparatus according to claim 8, **characterized by** further comprising:
an interference coordination information receiving module (42), configured to receive the interference coordination information from the neighbour cell.

**Patentansprüche**

**1.** Verfahren zum Verarbeiten von Inter-Zellen-Interferenzkoordinationsinformationen, ICIC, umfassend:

Bestimmen einer Menge von Ressourcenblöcken, RBs, welche von einem Zellenkantenbenutzer einer Zelle in einem vorbestimmten Zeitintervall eingenommen werden (S102);

Festlegen eines Wertes von Bits von derselben Menge in einer Interferenzkoordinationsinformation der Zelle auf 1 (S104);

Anordnen der Bits mit dem Wert von 1 in einer Bandbreite gemäß einer vorbestimmten Erweiterungssequenz, auf Basis eines Bereichs einer zugeordneten Ressource für den Zellenkantenbenutzer der Zelle (S106); und

Senden der Interferenzkoordinationsinformation von der Zelle zu einer Nachbarzelle (S108);

wobei der Schritt des Anordnens der Bits mit dem Wert von 1 in der Bandbreite gemäß der vorbestimmten Erweiterungssequenz auf Basis des Bereichs der zugeordneten Ressource für den Zellenkantenbenutzer der Zelle umfasst:

Einnehmen von unterschiedlichen Frequenzbereichen durch die zugeordnete Ressource des Zellenkantenbenutzers der Zelle und die zugeordnete Ressource des Zellenkantenbenutzers von anderen zwei Nachbarzellen in einer selben Basisstation;

wobei in der Interferenzkoordinationsinformation einer Zelle, deren zugeordnete Ressource des Zellenkantenbenutzers einen Frequenzbereich eines äußerst linken Abschnitts der Bandbreite einnimmt, ein Bit, welches einem ersten vorbestimmten RB entspricht, 1 ist, und andere Bits 0 sind, wobei der erste vorbestimmte RB erste N RBs aus einer Sequenz ist, in welcher die zugeordnete Ressource des Zellenkantenbenutzers der Zelle in einer ansteigenden Reihenfolge angeordnet ist, und N die Menge der RBs ist, welche von dem Zellenkantenbenutzer der Zelle in dem vorbestimmten Zeitintervall eingenommen werden;

wobei in der Interferenzkoordinationsinformation einer Zelle, deren zugeordnete Ressource des Zellenkantenbenutzer einen Frequenzbereich eines mittleren Abschnitts der Bandbreite einnimmt, ein Bit, welches einem zweiten vorbestimmten RB entspricht, 1 ist, und andere Bits 0 sind, wobei der zweite vorbestimmte RB letzte N RBs aus einer Sequenz ist, in welcher die zugeordnete Ressource des Zellenkantenbenutzers der Zelle von der Mitte aus nach zwei Seiten angeordnet ist; und

wobei in der Interferenzkoordinationsinformation einer Zelle, deren zugeordnete Ressource des Zellenkantenbenutzers einen Frequenzbereich eines dritten Abschnitts der Bandbreite einnimmt, ein Bit, welches einem dritten vorbestimmten RB entspricht, 1 ist, und andere Bits 0 sind, wobei der dritte vorbestimmte RB mittlere N RBs aus einer Sequenz ist, in welcher die zugeordnete Ressource des Zellenkantenbenutzers der Zelle in einer absteigenden Reihenfolge angeordnet ist.

2. Verfahren nach Anspruch 1, wobei der Schritt des Bestimmens der Menge der RBs, welche von dem Zellenkantenbenutzer der Zelle in dem vorbestimmten Zeitintervall eingenommen werden, umfasst:

Durchführen einer Statistik der Summe der RBs, welche von dem Zellenkantenbenutzer in einer bestimmten Zeitdauer eingenommen werden; und
Berechnen einer durchschnittlichen Menge der RBs, welche von dem Zellenkantenbenutzer in dem vorbestimmten Zeitintervall gemäß der Summe eingenommen werden.

3. Verfahren nach Anspruch 1 oder 2, wobei das vorbestimmte Zeitintervall ein Übertragungszeitintervall TTI ist.

4. Verfahren nach Anspruch 1, wobei der Schritt des Sendens der Interferenzkoordinationsinformation von der Zelle zu der Nachbarzelle umfasst:

Vergleichen entsprechender Bits abwechselnd der Interferenzkoordinationsinformation und Interferenzkoordinationsinformation, welche bei einem vorherigen Mal erhalten wurde; und
wenn eine Menge von Bits mit unterschiedlichen Werten in zwei Bitdiagrammen eine Schwelle übersteigt, Senden der Interferenzkoordinationsinformation an die Nachbarzelle.

5. Verfahren nach Anspruch 1 oder 4, weiter umfassend:
Zuweisen von Ressourcen, durch die Zelle, gemäß der Interferenzkoordinationsinformation der Zelle und Interferenzkoordinationsinformation von der Nachbarzelle.

6. Verfahren nach Anspruch 5, wobei die Zelle Statistiken der von der Nachbarzelle in einer vorbestimmten Zeitspanne empfangenen Interferenzkoordinationsinformation durchführt, um die Interferenzkoordinationsinformation von der Nachbarzelle zu erhalten.

7. Verfahren nach Anspruch 6, **dadurch gekennzeichnet, dass** der Schritt, dass die Zelle Statistiken der von der Nachbarzelle in der vorbestimmten Zeitspanne empfangenen Interferenzkoordinationsinformation durchführt, umfasst:
Durchführen, durch die Zelle, bitweiser Summierung oder bitweiser gewichteter Summierung über die von der Nachbarzelle in der vorbestimmten Zeitspanne empfangenen Interferenzkoordinationsinformation.

8. Einrichtung zum Verarbeiten von Inter-Zellen-Interferenzkoordinationsinformationen, ICIC, welche sich in einer Media Access Control-Ebene, MAC, einer Basisstation befindet und umfasst:

ein Ressourcendatenstatistikmodul (32), welches konfiguriert ist, eine Menge von Ressourcenblöcken RBs zu bestimmen, welche von einem Zellenkantenbenutzer einer Zelle in einem vorbestimmten Zeitintervall eingenommen werden;
ein Interferenzkoordinationsinformationserzeugungsmodul (34 ), welches konfiguriert ist, einen Wert von Bits von derselben Menge in einer Interferenzkoordinationsinformation der Zelle auf 1 festzulegen, und die Bits mit dem Wert von 1 in einer Bandbreite gemäß einer vorbestimmten Erweiterungssequenz auf Basis eines Bereichs einer zugeordneten Ressource für den Zellenkantenbenutzer der Zelle und einer Nachbarzelle der Zelle anzuordnen; und
ein Interferenzkoordinationsinformationssendemodul (36), welches konfiguriert ist, die Interferenzkoordinationsinformation an die Nachbarzelle zu senden;
wobei Interferenzkoordinationsinformationserzeugungsmodul (34) auch konfiguriert ist zum:

Einnehmen von unterschiedlichen Frequenzbereichen durch die zugeordnete Ressource des Zellenkantenbenutzers der Zelle und die zugeordnete Ressource des Zellenkantenbenutzers von anderen zwei Nachbarzellen in einer selben Basisstation;
wobei in der Interferenzkoordinationsinformation einer Zelle, deren zugeordnete Ressource des Zellenkantenbenutzers einen Frequenzbereich eines äußerst linken Abschnitts der Bandbreite einnimmt, ein Bit, welches einem ersten vorbestimmten RB entspricht, 1 ist, und andere Bits 0 sind, wobei der erste vorbestimmte RB erste N RBs aus einer Sequenz ist, in welcher die zugeordnete Ressource des Zellenkantenbenutzers der Zelle in einer ansteigenden Reihenfolge angeordnet ist, und N die Menge der RBs ist, welche von dem Zellenkantenbenutzer der Zelle in dem vorbestimmten Zeitintervall eingenommen werden;

wobei in der Interferenzkoordinationsinformation einer Zelle, deren zugeordnete Ressource des Zellenkantenbenutzer einen Frequenzbereich eines mittleren Abschnitts der Bandbreite einnimmt, ein Bit, welches einem zweiten vorbestimmten RB entspricht, 1 ist, und andere Bits 0 sind, wobei der zweite vorbestimmte RB letzte N RBs aus einer Sequenz ist, in welcher die zugeordnete Ressource des Zellenkantenbenutzers der Zelle von der Mitte aus nach zwei Seiten angeordnet ist; und

wobei in der Interferenzkoordinationsinformation einer Zelle, deren zugeordnete Ressource des Zellenkantenbenutzers einen Frequenzbereich eines dritten Abschnitts der Bandbreite einnimmt, ein Bit, welches einem dritten vorbestimmten RB entspricht, 1 ist, und andere Bits 0 sind, wobei der dritte vorbestimmte RB mittlere N RBs aus einer Sequenz ist, in welcher die zugeordnete Ressource des Zellenkantenbenutzers der Zelle in einer absteigenden Reihenfolge angeordnet ist.

**9.** Einrichtung nach Anspruch 8, **dadurch gekennzeichnet, dass** sie weiter umfasst:
ein Interferenzkoordinationsinformationsempfangsmodul (42), welches konfiguriert ist, die Interferenzkoordinationsinformation von der Nachbarzelle zu empfangen.

## Revendications

**1.** Procédé de traitement d'informations de coordination d'interférences intercellulaires, ICIC, comprenant :

la détermination d'une quantité de blocs de ressources, RB, occupés par un utilisateur de bord de cellule d'une cellule dans un intervalle de temps prédéterminé (S102) ;
le réglage d'une valeur de bits de la même quantité dans une information de coordination d'interférences de la cellule à 1 (S104) ;
l'agencement des bits avec la valeur de 1 sur une largeur de bande selon une séquence d'extension prédéterminée, sur la base d'une plage d'une ressource dédiée pour l'utilisateur de bord de cellule de la cellule (S106) ; et
l'envoi des informations de coordination d'interférences de la cellule à une cellule voisine (S108) ;
dans lequel l'étape d'agencement des bits avec la valeur de 1 sur la largeur de bande selon la séquence d'extension prédéterminée sur la base de la plage de la ressource dédiée pour l'utilisateur de bord de cellule de la cellule comprend :

l'occupation, par la ressource dédiée de l'utilisateur de bord de cellule de la cellule et la ressource dédiée de l'utilisateur de bord de cellule de deux autres cellules voisines dans une même station de base, de différentes plages de fréquences ;
dans l'information de coordination d'interférences d'une cellule dont la ressource dédiée de l'utilisateur de bord de cellule occupe une plage de fréquences d'une section la plus sur la gauche de la largeur de bande, un bit correspondant à un premier RB prédéterminé étant 1, et d'autres bits étant 0, dans lequel le premier RB prédéterminé est N premiers RB d'une séquence dans laquelle la ressource dédiée de l'utilisateur de bord de cellule de la cellule est agencée dans un ordre ascendant, et N est la quantité des RB occupés par l'utilisateur de bord de cellule de la cellule dans l'intervalle de temps prédéterminé ;
dans l'information de coordination d'interférences d'une cellule dont la ressource dédiée de l'utilisateur de bord de cellule occupe une plage de fréquences d'une section centrale de la largeur de bande, un bit correspondant à un deuxième RB prédéterminé étant 1, et d'autres bits étant 0, dans lequel le deuxième RB prédéterminé est les N derniers RB d'une séquence dans laquelle la ressource dédiée de l'utilisateur de bord de cellule de la cellule est agencée depuis le centre vers les deux côtés ; et
dans l'information de coordination d'interférences d'une cellule dont la ressource dédiée de l'utilisateur de bord de cellule occupe une plage de fréquences d'une troisième section de la largeur de bande, un bit correspondant à un troisième RB prédéterminé étant 1, et d'autres bits étant 0, dans lequel le troisième RB prédéterminé est N RB centraux d'une séquence dans laquelle la ressource dédiée de l'utilisateur de bord de cellule de la cellule est agencée dans un ordre descendant.

**2.** Procédé selon la revendication 1, dans lequel l'étape de détermination de la quantité des RB occupés par l'utilisateur de bord de cellule de la cellule dans l'intervalle de temps prédéterminé comprend :

la réalisation de statistiques sur la somme des RB occupés par l'utilisateur de bord de cellule pendant une certaine durée de temps ; et

le calcul d'une quantité moyenne des RB occupés par l'utilisateur de bord de cellule dans l'intervalle de temps prédéterminé selon la somme.

3. Procédé selon la revendication 1 ou 2, dans lequel l'intervalle de temps prédéterminé est un intervalle de temps de transmission, TTI.

4. Procédé selon la revendication 1, dans lequel l'étape d'envoi de l'information de coordination d'interférences de la cellule à la cellule voisine comprend :

la comparaison l'un après l'autre de bits correspondants de l'information de coordination d'interférences et de l'information de coordination d'interférences obtenue dans un dernier temps ; et

si une quantité de bits avec différentes valeurs dans deux graphes de bits excède un seuil, l'envoi de l'information de coordination d'interférences à la cellule voisine.

5. Procédé selon la revendication 1 ou 4, comprenant en outre :
l'attribution d'une ressource, par la cellule, selon l'information de coordination d'interférences de la cellule et l'information de coordination d'interférences depuis la cellule voisine.

6. Procédé selon la revendication 5, dans lequel la cellule réalise des statistiques sur l'information de coordination d'interférences reçue depuis la cellule voisine durant une période de temps prédéterminée, pour obtenir l'information de coordination d'interférences depuis la cellule voisine.

7. Procédé selon la revendication 6, **caractérisé en ce que** l'étape au cours de laquelle la cellule réalise des statistiques sur l'information de coordination d'interférences reçue depuis la cellule voisine durant la période de temps prédéterminée comprend :
la réalisation, par la cellule, d'une somme par bits ou d'une somme pondérée par bits sur l'information de coordination d'interférences reçue depuis la cellule voisine durant la période de temps prédéterminée.

8. Appareil de traitement d'informations de coordination d'interférences intracellulaires, ICIC, situé au niveau d'une couche de commande d'accès au support, MAC, d'une station de base, et comprenant :

un module de statistiques de données de ressources (32), configuré pour déterminer une quantité de blocs de ressource, RB, occupés par un utilisateur de bord de cellule d'une cellule dans un intervalle de temps prédéterminé ;

un module de génération d'informations de coordination d'interférences (34), configuré pour régler une valeur de bits de la même quantité dans une information de coordination d'interférences de la cellule à 1, et pour agencer les bits avec la valeur de 1 sur une largeur de bande selon une séquence d'extension prédéterminée sur la base d'une plage d'une ressource dédiée pour l'utilisateur de bord de cellule de la cellule et d'une cellule voisine de la cellule ; et

un module d'envoi d'informations de coordination d'interférences (36), configuré pour envoyer l'information de coordination d'interférences à la cellule voisine ;

dans lequel le module de génération d'informations de coordination d'interférences (34) est également configuré afin que :

la ressource dédiée de l'utilisateur de bord de cellule de la cellule et la ressource dédiée de l'utilisateur de bord de cellule de deux autres cellules voisines dans une même station de base occupent différentes plages de fréquences ;

dans l'information de coordination d'interférences d'une cellule dont la ressource dédiée de l'utilisateur de bord de cellule occupe une plage de fréquences d'une section la plus sur la gauche de la largeur de bande, un bit correspondant à un premier RB prédéterminé étant 1 et d'autres bits étant 0, dans lequel le premier RB prédéterminé est N premiers RB d'une séquence dans laquelle la ressource dédiée de l'utilisateur de bord de cellule de la cellule est agencée dans un ordre ascendant, et N est la quantité des RB occupés par l'utilisateur de bord de cellule de la cellule dans l'intervalle de temps prédéterminé ;

dans l'information de coordination d'interférences d'une cellule dont la ressource dédiée de l'utilisateur de bord de cellule occupe une plage de fréquences d'une section centrale de la largeur de bande, un bit correspondant à un deuxième RB prédéterminé étant 1, et d'autres bits étant 0, dans lequel le deuxième RB prédéterminé est N derniers RB d'une séquence dans laquelle la ressource dédiée de l'utilisateur de bord de cellule de la cellule est agencée depuis le centre vers deux côtés ; et

dans l'information de coordination d'interférences d'une cellule dont la ressource dédiée de l'utilisateur de bord de cellule occupe une plage de fréquences d'une troisième section de la largeur de bande, un bit correspondant à un troisième RB prédéterminé étant 1, et d'autres bits étant 0, dans lequel le troisième RB prédéterminé est N RB centraux d'une séquence dans laquelle la ressource dédiée de l'utilisateur de bord de cellule de la cellule est agencée dans un ordre descendant.

9. Appareil selon la revendication 8, **caractérisé en ce qu'**il comprend en outre :

un module de réception d'informations de coordination d'interférences (42), configuré pour recevoir l'information de coordination d'interférences depuis la cellule voisine.

Determining the quantity of the RBs occupied by cell edge user of a cell in the predetermined time interval $\qquad$ S102

Setting the value of the bits of the same quantity in the interference coordination information of the cell to 1 $\qquad$ S104

Arranging the bits with the value of 1 in the interference coordination information of the cell on the bandwidth according to a predetermined extension sequence based on the range of the dedicated resource for cell edge user of the cell $\qquad$ S106

Sending the interference coordination information from the cell to the neighbour cell $\qquad$ S108

## Fig. 1

Sector1

RNTP extension direction →

$\overline{N}^{GBR}_{CEU,TTI}$

| OC | BC | BC |

Sector2

$\overline{N}^{GBR}_{CEU,TTI}$

←→

| BC | OC | BC |

Sector3

$\overline{N}^{GBR}_{CEU,TTI}$

←

| BC | BC | OC |

**Fig. 2**

```
┌─────────────────────────────────────┐
│                                      │
│   Resource data statistics module32  │
│                                      │
└─────────────────────────────────────┘

┌─────────────────────────────────────┐
│       Interference coordination      │
│  information generating module 34    │
└─────────────────────────────────────┘

┌─────────────────────────────────────┐
│       Interference coordination      │
│   information sending module 36      │
└─────────────────────────────────────┘
```

**Fig. 3**

Fig. 4

```
┌─────────────────────────────┐
│   Reading the quantity of RB │
│  allocated for satisfying GBR of │ ⌇ S501
│   CEU from a resource quantity │
│   allocating module in each TTI │
└─────────────────────────────┘
              │
              ▼
         ╱─────────────╲
   No   ╱ Whether it reaches the ╲
◄──────╱  reporting period DlRntpRptInterval ╲
        ╲      of the RNTP?      ╱
         ╲───────────────╱
              │ Yes
              ▼
┌─────────────────────────────┐
│  Computing the average quantity of │
│  RB required for satisfying the GBR │ ⌇ S502
│         of CEU in each TTI │
└─────────────────────────────┘
              │
              ▼
┌─────────────────────────────┐
│  Generating the RNTP information │
│  RNTP_{nur} in the statistic period │ ⌇ S503
└─────────────────────────────┘
              │
              ▼
┌─────────────────────────────┐
│  Comparing the RNTP information │
│  in the statistic period with that in │ ⌇ S504
│        last statistic period │
└─────────────────────────────┘
              │
              ▼
         ╱─────────────────╲
   No   ╱  Whether the difference between ╲
◄──────╱  the RNTP information of this time and ╲
        ╲ the RNTP information of last time exceeds ╱
         ╲   the comparison threshold? ╱
          ╲─────────────────╱
              │ Yes
              ▼
┌─────────────────────────────┐
│   Sending the RNTP information │
│    counted this time to several │
│        neighbour cells generating │ ⌇ S505
│   interference, and record this RNTP │
│            information │
└─────────────────────────────┘
              │
              ▼
           ( End )
```

**Fig. 5**

Defining an RNTP statistic and
receiving period, and a timer — S601

Whether the RNTP
information is received from the
neighbour cell in the
current TTI

No

Yes

Receiving the RNTP
information from the
neighbour cell and recording
the ID of the neighbour cell — S602

Performing summation on
the received RNTP to obtain
$RNTP_{Nb}^{sum}$ — S603

Whether it reaches the
statistic period $T_{rntp}$ of RNTP?

No

Yes

Completing the statistics of
this RNTP information,
updating the resource bitmap,
and outputting to the resource
location allocation module;
and the resource allocating
module allocates resource
according to the information — S604

End

**Fig. 6**

Fig. 7

Sector 1  HII extension
direction ⟶

$\overline{N}_{CEU,TTI}^{GBR}$

| OC | BC | BC | IC |

Sector 2

$\overline{N}_{CEU,TTI}^{GBR}$

| BC | OC | BC | IC |

Sector 3

$\overline{N}_{CEU,TTI}^{GBR}$

| BC | BC | OC | IC |

## Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007086406 A1